# EUROPÄISCHE PATENTSCHRIFT

(11) **EP 1 900 560 B1**
(45) Veröffentlichungstag und Bekanntmachung des Hinweises auf die Patenterteilung: **24.02.2010**
(21) Anmeldenummer: 06019140.0
(22) Anmeldetag: 13.09.2006
(51) Int. Cl.: B60J 7/057, B60J 7/043, B60J 1/20

(54) **Rollosystem für ein Schiebedach**
Sun blind system for sunroof
Fermeture roulante pour toit ouvrant

(43) Veröffentlichungstag der Anmeldung: 19.03.2008
(73) Patentinhaber: ArvinMeritor GmbH, 63128 Dietzenbach (DE)
(72) Erfinder: Jugl, Michael, 65843 Sulzbach (DE); Biewer, Christian, 64839 Altheim (DE); Böhm, Horst, 60599 Frankfurt/Main (DE)
(74) Vertreter: Prinz & Partner

(56) Entgegenhaltungen:
- EP-A- 1 584 509
- WO-A2-2006/053520

## Beschreibung

Die Erfindung betrifft ein Rollosystem für ein Schiebedach, mit einer Führungsschiene, einem Federstahlband, das abschnittsweise in der Führungsschiene geführt ist und dessen außerhalb der Führungsschiene befindliches Ende sich zu einem Wickel zusammenzieht, und einem Rollo, das an dem Federstahlband angebracht ist.

Ein solches Rollosystem ist aus der EP 1 584 509 A2 oder der WO 2006/053520 A2 bekannt. Der Vorteil dieses Rollosystems besteht darin, daß es sehr kompakt ist. Das Federstahlband dient sowohl zur Befestigung des Rollos als auch als Rückstellfeder. Es hat sich aber herausgestellt, daß die Bedienkräfte, die zum Verschieben des Rollos in der Führungsschiene notwendig sind, sich in Abhängigkeit von der Verschieberichtung ändern. Wenn das Rollo hin zu einer geschlosseneren Stellung bewegt wird, also ausgezogen wird, sind höhere Bedienkräfte notwendig als zum Zurückschieben und Aufwickeln des Rollos in einen geöffneteren Zustand. Außerdem hat sich herausgestellt, daß die Bedienkräfte, wenn das Rollo hin zu einer geschlosseneren Stellung bewegt wird, mit zunehmendem Auszug des Rollos ansteigen. Allgemein werden unterschiedliche und/oder sich ändernden Bedienkräfte vom Benutzer als störend empfunden.

Die Aufgabe der Erfindung besteht darin, ein Rollosystem der eingangs genannten Art dahingehend weiterzubilden, daß sich konstantere Bedienkräfte ergeben.

Zur Lösung dieser Aufgabe ist erfindungsgemäß eine Kompensationsfeder vorgesehen. Die Erfindung beruht auf dem Grundgedanken, zusätzlich zum Wickel, der eine Rückstellkraft auf das Rollo ausübt, eine weitere Feder vorzusehen, die eine zusätzlich zur Rückstellkraft wirkende Federkraft ausübt. Die beiden Kräfte überlagern einander so, daß sich konstantere Bedienkräfte ergeben.

Gemäß einer Ausführungsform der Erfindung ist vorgesehen, daß die Kompensationsfeder durch einen Hilfswickel aus dem Federstahlband gebildet ist, der auf der zum Wickel entgegengesetzten Seite der Führungsschiene angeordnet ist. Das Federstahlband ist dabei so lang ausgeführt, daß es vom Wickel durch die Führungsschiene hindurch und über diese hinaus verläuft, so daß das freie Ende sich zu einem Hilfswickel zusammenkrümmt. Beim Verschieben des Rollos in eine geschlossenere Stellung wird also der Wickel kleiner, während der Hilfswickel größer wird, und umgekehrt. Die von den beiden Wickeln ausgeübten Rückstellkräfte heben sich zum Großteil auf, so daß beim Verschieben des Rollos lediglich Reibungskräfte überwunden werden müssen, im wesentlichen hervorgerufen vom Federstahlband und dem Rollo in der Führungsschiene.

Gemäß einer weiteren Ausführungsform der Erfindung ist vorgesehen, daß die Kompensationsfeder in Längsrichtung der Führungsschiene auf das Federstahlband wirkt. Bei dieser Ausführungsform übt die Kompensationsfeder, die beispielsweise eine Zugfeder sein kann, ähnlich wie der Hilfswickel eine Kraft auf das Rollo aus, die entgegengesetzt zur vom Wickel ausgeübten Rückstellkraft ist.

Gemäß einer wiederum weiteren Ausführungsform der Erfindung ist vorgesehen, daß die Kompensationsfeder auf den Wickel wirkt. Dies ermöglicht, eine vom Durchmesser des Wickels abhängige Reibungskraft auf den Wickel auszuüben, so daß in der Summe Bedienkräfte erhalten werden, die sich beim Verschieben des Rollos kaum ändern.

Vorteilhafte Ausgestaltungen der Erfindung ergeben sich aus den Unteransprüchen.

Die Erfindung wird nachfolgend anhand vom verschiedenen Ausführungsformen beschrieben, die in den beigefügten Zeichnungen dargestellt sind. In diesen zeigen:
- Figur 1 eine perspektivische Ansicht eines Fahrzeugdaches mit einem Rollo;
- Figur 2 eine schematische Seitenansicht eines Rollos, wie es aus der eingangs genannten EP 1 584 509 A2 bekannt ist;
- Figur 3 einen Schnitt entlang der Ebene III-III von Figur 1;
- Figur 4 in vergrößertem Maßstab den Ausschnitt IV von Figur 2;
- Figur 5 ein Rollosystem gemäß einer ersten Ausführungsform der Erfindung in einer schematischen Draufsicht;
- Figur 6 das Rollosystem von Figur 5 in einer schematischen Seitenansicht;
- Figur 7 ein Rollosystem gemäß einer zweiten Ausführungsform in einer schematischen Seitenansicht;
- Figur 8 ein Rollosystem gemäß einer dritten Ausführungsform in einer schematischen Seitenansicht; und
- Figur 9 ein Diagramm der Auszugskräfte des Rollos in Abhängigkeit vom der Länge des ausgezogenen Rollos.

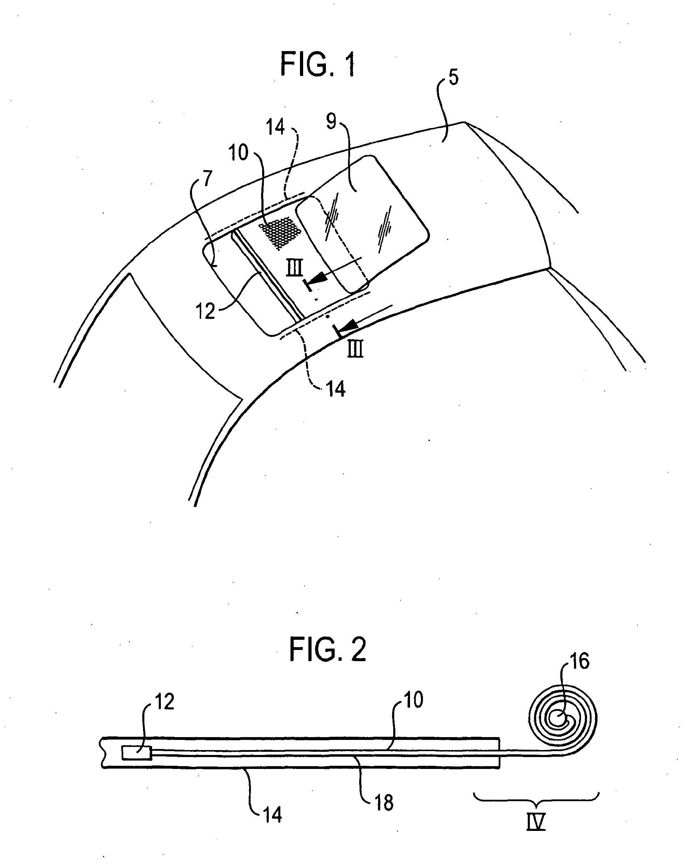

In Figur 1 ist ein Fahrzeugdach 5 zu sehen, welches mit einer Öffnung 7 versehen ist. Der Öffnung 7 ist ein Deckel 9 eines Schiebedachsystems zugeordnet. Der Deckel 9 kann zwischen einer geschlossenen Stellung, in welcher er die Öffnung 7 verschließt, und einer in Figur 1 gezeigten, geöffneten Stellung verstellt werden. Unterhalb des Deckels 9 und auch unterhalb der Öffnung 7 ist ein Rollo 10 angeordnet, das Teil eines Rollosystems ist. Das Rollo 10 kann, bezogen auf das Fahrzeug, nach vorne und hinten verschoben werden. Wenn das Rollo 10 vollständig nach hinten geschoben ist, ist die Öffnung 7 vollständig freigegeben. Frischluft und Sonnenlicht haben dann freien Zugang zum Fahrzeuginnenraum. Wenn das Rollo 10 vollständig nach vorne geschoben ist, ist die Öffnung 7 vom Rollo abgedeckt. Frischluft und Sonnenlicht können somit nur in begrenztem Umfang in den Fahrzeuginnenraum gelangen.

Das Rollo 10 besteht aus einem flexiblen Material, beispielsweise Stoff oder einer Kunststofffolie. An seinem vorderen Rand ist ein Spriegel 12 vorgesehen, an dem ein Fahrzeuginsasse angreifen kann, um das Rollo nach vorne oder hinten zu verschieben. Seitlich entlang der Öffnung 7 erstrecken sich zwei Führungsschienen 14, die ebenfalls Teil des Rollosystems sind und in denen die beiden Längsränder des Rollos, also in der Fahrzeuglängsrichtung betrachtet der rechte und der linke Rand des Rollos 10, aufgenommen sind. Im Bereich des hinteren Endes der Öffnung 7 befindet sich der hintere Rand des Rollos, an dem ein Wickelkörper 16 angebracht ist. Der Wickelkörper ist nicht am Dach gelagert; er kann als Kunststoffleiste ausgeführt sein, die auf den hinteren Rand des Rollos aufgespritzt ist und im wesentlichen die Funktion hat, den hinteren Rand des Rollos in einer Richtung quer zur Längsrichtung des Fahrzeugs gespannt zu halten. Grundsätzlich funktioniert das Rollosystem aber auch ohne Wickelkörper; das Rollo 10 wickelt sich dann frei zwischen den Federstahlbändern auf, wenn diese die Führungsschienen verlassen.

Entlang den Längsrändern des Rollos 10, also in dem den Führungsschienen 14 zugeordneten Bereich, ist jeweils ein Federstahlband 18 vorgesehen, das so ausgeführt ist, daß es sich zu einer Spirale zusammenrollt, wenn es nicht in den Führungsschienen gestreckt gehalten wird.

Das Rollo 10 ist mit den Federstahlbändern 18 verklebt oder auf andere geeignete Weise verbunden.

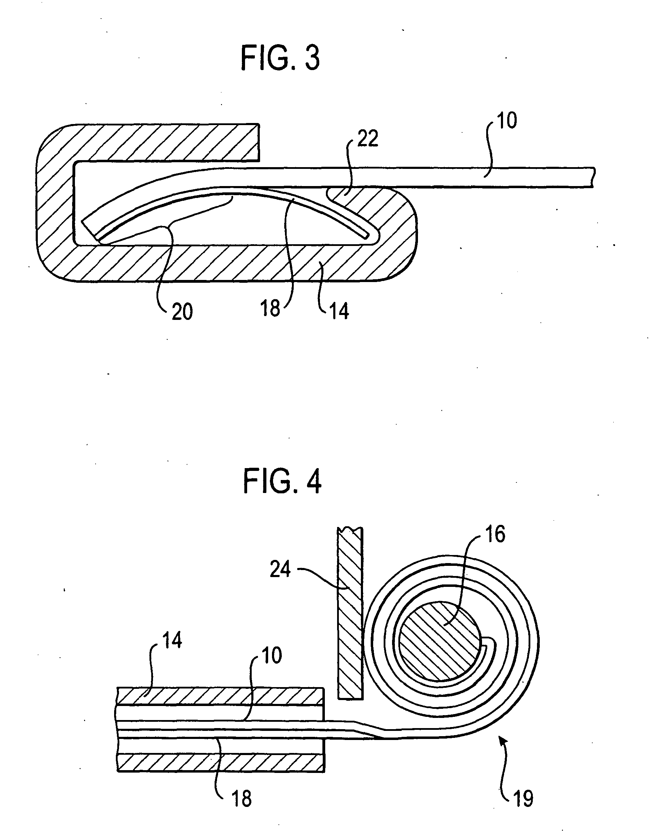

Wenn das Rollo 10 nach hinten verschoben wird, um die Öffnung 7 freizugeben, wird der hintere Bereich des Rollos 10 aus den Führungsschienen 14 herausgeschoben. Dabei wird es von den Federstahlbändern 18 automatisch und von alleine zu einem Wickel 19 aufgerollt (siehe insbesondere Figur 4). Dieser ist aufgrund der Vorspannung der Federstahlbänder 18 und aufgrund des Wickelkörpers 16 straff gespannt. Der Rollowickel liegt an einer Wand 24 an, die einen Aufnahmeraum für das aufgewickelte Rollo 10 abgrenzt.

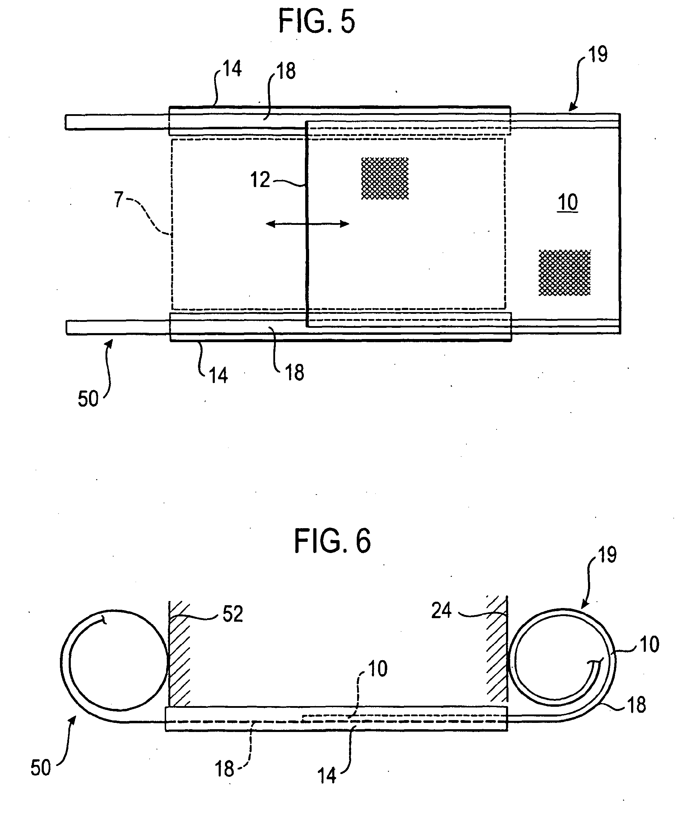

Anhand der Figuren 5 und 6 wird nun eine erste Ausführungsform des erfindungsgemäßen Rollosystems beschrieben. Für die von den Figuren 1 bis 4 bekannten Bauteile werden dieselben Bezugszeichen verwendet, und es wird auf die obigen Erläuterungen verwiesen.

Die Ausführungsform gemäß den Figuren 5 und 6 zeichnet sich dadurch aus, daß die Federstahlbänder 18 über das vorderen Ende des Rollos und das vordere Ende der Führungsschienen 14 hinaus verlängert sind, so daß auf der dem Wickel 19 gegenüberliegenden Seite jeder Führungsschiene 14 ein Hilfswickel 50 ausgebildet ist. Dieser ist allgemein gesprochen das Spiegelbild des Wickels 19 (siehe auch die Hilfswand 52) mit dem Unterschied, daß sich das Rollo 10 niemals im Bereich des Hilfswickels 50 befinden kann; selbst bei vollständig geschlossenem Rollo befindet sich dessen Vorderrand zwischen den Führungsschienen 14 und damit noch nicht im Bereich der Hilfswickel 50. Die beiden Federstahlbänder 18 sind so lang ausgeführt, daß selbst bei maximal aufgewickeltem Rollo 10 noch ein kleiner Hilfswickel vor den Führungsschienen verbleibt.

Jeder Hilfswickel 50 wirkt als Kompensationsfeder, da er eine zur Rückstellkraft der Wickels 19 entgegengesetzte Kraft erzeugt. Dies führt dazu, daß das Rollo in beiden Verstellrichtungen mit etwa derselben Bedienkraft bewegt werden kann.

Ein weiterer Vorteil der ersten Ausführungsform besteht darin, daß aufgrund der Länge, mit welcher die Federstahlbänder 18 ausgeführt sind, das Risiko minimiert ist, daß sich die beiden Federstahlbänder 18 unterschiedlich in den Führungsschienen 14 verstellen; der Spriegel 12 erstreckt sich immer senkrecht zu den Führungsschienen 14.

Aus Montagegründen kann jedes Federstahlband 18 zweiteilig ausgeführt werden, beispielsweise aus einem vorderen und einem hinteren Abschnitt, die im Bereich des Spriegels miteinander verbunden werden.

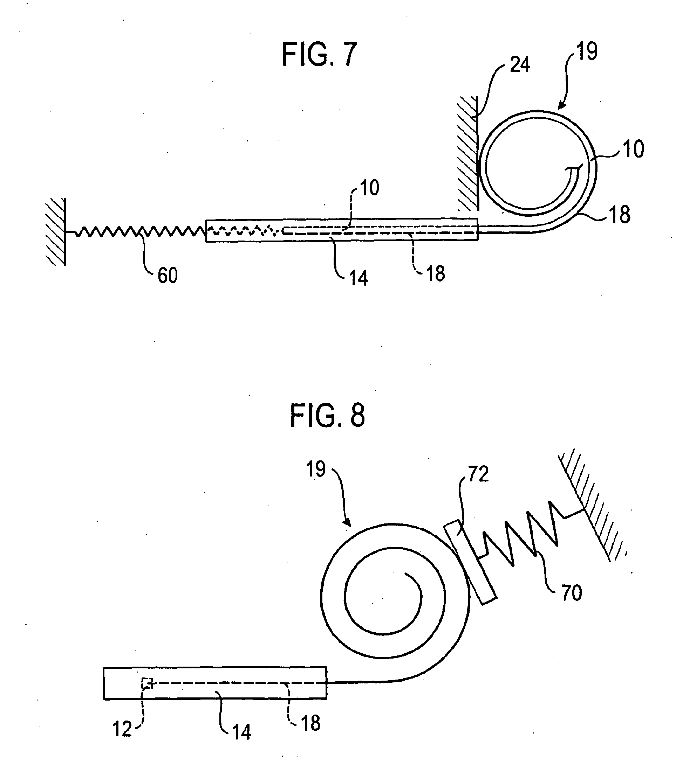

Anhand von Figur 7 wird nun eine zweiten Ausführungsform des erfindungsgemäßen Rollosystems beschrieben. Für die von den vorhergehenden Figuren bekannten Bauteile werden dieselben Bezugszeichen verwendet, und es wird auf die obigen Erläuterungen verwiesen.

Anstelle der Hilfswickel 50 wird bei der zweiten Ausführungsform eine Kompensationsfeder 60 verwendet, die als Zugfeder ausgebildet ist. Ein Ende der Kompensationsfeder 60 ist stationär angebracht, und das andere Ende der Kompensationsfeder 60 ist am vorderen Ende des Federstahlbandes 18 angebracht, beispielsweise im Bereich des Spriegels 12.

Die Kompensationsfeder 60 erzeugt eine zur Rückstellkraft der Wickels 19 entgegengesetzte Kraft, so daß das Rollo in beiden Verstellrichtungen mit etwa derselben Bedienkraft bewegt werden kann.

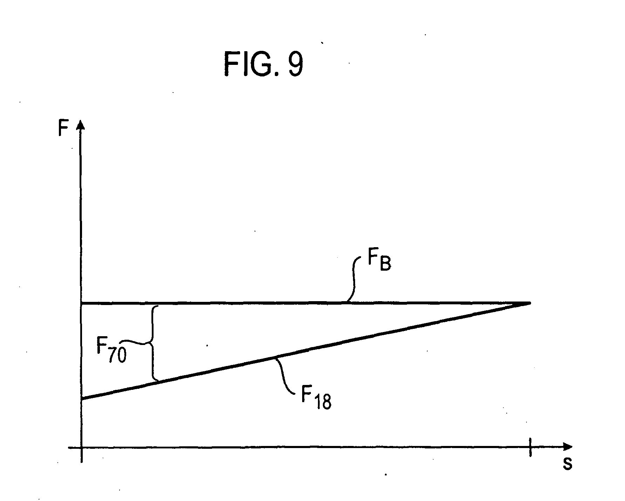

Anhand der Figuren 8 und 9 wird nun eine dritte Ausführungsform des erfindungsgemäßen Rollosystems beschrieben. Für die von den vorhergehenden Figuren bekannten Bauteile werden dieselben Bezugszeichen verwendet, und es wird auf die obigen Erläuterungen verwiesen.

Bei der dritten Ausführungsform wird ähnlich dem in den Figuren 1 bis 4 dargestellten Rollosystem nur ein Wickel 19 verwendet; am vorderen Ende (beispielsweise am Spriegel 12) der Federstahlbänder 18 greift keine Feder an. Statt dessen ist eine Kompensationsfeder 70 vorgesehen, die als Druckfeder ausgebildet ist. Diese wirkt auf ein Reibungselement 72, das nach Art einer Bremse auf den Wickel 19 drückt. Das vom Reibungselement 72 angewandte Ende der Kompensationsfeder ist stationär abgestützt.

Die Kompensationsfeder 70 ist so bemessen, daß die von ihr zusammen mit dem Reibungselement 72 ausgeübte Bremskraft sich verringert (aufgrund der Verringerung der Vorspannung der Kompensationsfeder 70), wenn sich der Durchmesser des Wickels 19 verringert. Da aber die Rückstellkraft des Wickels 19 zunimmt, wenn sich der Durchmesser des Wickels 19 verringert, ergibt sich insgesamt eine annähernd konstante und von der Position des Rollos 10 in der Führungsschiene 14 unabhängige Rückstellkraft, die vom Benutzer aufgebracht werden muß, um das Rollo in der einen oder anderen Richtung zu verstellen.

In Figur 9 ist die Rückstellkraft F₁₈ dargestellt, die von den Federstahlbändern 18 erzeugt wird, und die Bremskraft F₇₀, die von der Kompensationsfeder 70 erzeugt wird. Es ist zu erkennen, daß sich die Kräfte, betrachtet über den Verstellweg s des Rollos 10, entgegengesetzt verhalten; wenn die Rückstellkraft F₁₈ abnimmt, steigt die Bremskraft F₇₀. In der Summe ergibt sich eine annähernd konstante Bedienkraft F_{B}.

## Patentansprüche

1. Rollosystem (10, 14) für ein Schiebedach, mit einer Führungsschiene (14), einem Federstahlband (18), das abschnittsweise in der Führungsschiene (14) geführt ist und dessen außerhalb der Führungsschiene befindliches Ende sich zu einem Wickel (19) zusammenzieht, und einem Rollo (10), das an dem Federstahlband (18) angebracht ist, **dadurch gekennzeichnet, daß** eine Kompensationsfeder (50; 60; 70) vorgesehen ist.

2. Rollosystem nach Anspruch 1, **dadurch gekennzeichnet, daß** die Kompensationsfeder (70) auf den Wickel (19) wirkt.

3. Rollosystem nach Anspruch 2, **dadurch gekennzeichnet, daß** die Kompensationsfeder (70) eine vom Durchmesser des Wickels (19) abhängige Reibungskraft auf den Wickel ausübt.

4. Rollosystem nach Anspruch 1, **dadurch gekennzeichnet, daß** die Kompensationsfeder (60) in Längsrichtung der Führungsschiene (14) auf das Federstahlband (18) wirkt.

5. Rollosystem nach Anspruch 4, **dadurch gekennzeichnet, daß** die Kompensationsfeder eine Zugfeder (60) ist.

6. Rollosystem nach Anspruch 1, **dadurch gekennzeichnet, daß** die Kompensationsfeder durch einen Hilfswickel (50) aus dem Federstahlband (18) gebildet ist, der auf der zum Wickel (19) entgegengesetzten Seite der Führungsschiene (14) angeordnet ist.

7. Rollosystem nach Anspruch 6, **dadurch gekennzeichnet, daß** das Federstahlband (18) sich durch die Führungsschiene (14) hindurcherstreckt.

## Claims

1. Roller blind system (10, 14) for a sliding roof, having a guide rail (14), having a spring steel strip (18) which is guided in sections in the guide rail (14) and whose end which is situated outside the guide rail contracts to form a coil (19), and having a roller blind (10) which is attached to the spring steel strip (18), **characterized in that** a compensation spring (50; 60; 70) is provided.

2. Roller blind system according to Claim 1, **characterized in that** the compensation spring (70) acts on the coil (19).

3. Roller blind system according to Claim 2, **characterized in that** the compensation spring (70) exerts on the coil (19) a friction force which is dependent on the diameter of the coil.

4. Roller blind system according to Claim 1, **characterized in that** the compensation spring (60) acts on the spring steel strip (18) in the longitudinal direction of the guide rail (14).

5. Roller blind system according to Claim 4, **characterized in that** the compensation spring is a tension spring (60).

6. Roller blind system according to Claim 1, **characterized in that** the compensation spring is formed by a secondary coil (50) of the spring steel strip (18), which secondary coil (50) is arranged on the opposite side of the guide rail (14) in relation to the coil (19).

7. Roller blind system according to Claim 6, **characterized in that** the spring steel strip (18) extends through the guide rail (14).

## Revendications

1. Système de store enroulable (10, 14) pour un toit ouvrant, comprenant un rail de guidage (14), une bande d'acier à ressort (18), qui est guidée en partie dans le rail de guidage (14), et dont l'extrémité se trouvant en dehors du rail de guidage se resserre en forme de bobine (19), et un store enroulable (10) qui est monté sur la bande d'acier à ressort (18), **caractérisé en ce que** l'on prévoit un ressort de compensation (50 ; 60 ; 70).

2. Système de store enroulable selon la revendication 1, **caractérisé en ce que** le ressort de compensation (70) agit sur la bobine (19).

3. Système de store enroulable selon la revendication 2, **caractérisé en ce que** le ressort de compensation (70) exerce sur la bobine une force de frottement dépendant du diamètre de la bobine (19).

4. Système de store enroulable selon la revendication 1, **caractérisé en ce que** le ressort de compensation (60) agit sur la bande d'acier à ressort (18) dans la direction longitudinale du rail de guidage (14).

5. Système de store enroulable selon la revendication 4, **caractérisé en ce que** le ressort de compensation est un ressort de traction (60).

6. Système de store enroulable selon la revendication 1, **caractérisé en ce que** le ressort de compensation est formé par une bobine auxiliaire (50) constituée de la bande d'acier à ressort (18), qui est disposée sur le côté du rail de guidage (14) opposé à la bobine (19).

7. Système de store enroulable selon la revendication 6, **caractérisé en ce que** la bande d'acier à ressort (18) traverse le rail de guidage (14).
